# EUROPEAN PATENT SPECIFICATION

(11) **EP 2 647 772 B1**
(45) Date of publication and mention of the grant of the patent: **05.01.2022**
(21) Application number: 11845577.3
(22) Date of filing: 28.11.2011
(51) Int. Cl.: E02F 9/24, B60R 1/00, H04N 5/225

(54) **SIDE CAMERA ATTACHMENT STRUCTURE FOR CONSTRUCTION MACHINERY**
SEITENKAMERABEFESTIGUNGSSTRUKTUR FÜR BAUMASCHINEN
STRUCTURE DE FIXATION DE CAMÉRA LATÉRALE POUR MACHINE DE CONSTRUCTION

(30) Priority: 29.11.2010 JP 2010265511
(43) Date of publication of application: 09.10.2013
(73) Proprietor: Hitachi Construction Machinery Co., Ltd, Tokyo 112-8563 (JP)
(72) Inventor: ABE, Shinya, Tsuchiura-shi Ibaraki 300-0013 (JP); TANAKA, Yasushi, Tsuchiura-shi Ibaraki 300-0013 (JP)
(74) Representative: MERH-IP Matias Erny Reichl Hoffmann Patentanwälte PartG mbB
(86) International application number: PCT/JP2011/077336
(87) International publication number: WO 2012/073872

(56) References cited:
- JP-A- H08 132 978
- JP-A- 2006 336 361
- JP-A- 2007 278 025
- JP-A- 2008 231 726
- JP-A- 2009 113 736
- JP-A- 2010 043 419
- US-A1- 2008 231 744
- US-A1- 2009 084 004
- None

## Description

### TECHNICAL FIELD

The present invention relates to an attachment structure of a side camera which is provided to monitor a side of a construction machine such as a hydraulic excavator or crane.

### BACKGROUND ART

A camera which monitors a surrounding area is generally provided in a construction machine such as a hydraulic excavator. A monitoring camera, which is provided above a counterweight behind an engine compartment, and monitors the safety of the area behind a construction machine in operation, is proposed (refer to Patent Document 1, for example). Furthermore, Patent Document 2 discloses a monitor mounted on a hydraulic shovel comprising a left rear camera, a right rear camera, a monitor screen for displaying the images of the cameras on one screen, and a controller 41 which, when an operator operates an operation lever, selectively enlarges and displays the images of the camera for photographing the opposite side of the operating direction of the operation lever.

For example, a wheel hydraulic excavator provided with four wheels, namely, front and back right and left positions, and configured to travel on a public road is proposed as a construction machine such as a hydraulic excavator. An operator's cab is provided on the left side in such a construction machine (left side in vehicle), and a working device of a boom, arm, etc., is provided in the central portion of a vehicle on the right side of the operator's cab, see e.g. JP 2010 043419 A.

The working device is in a folded storage condition during traveling, so that it is difficult for an operator to recognize the surrounding area on the right side of the vehicle. Therefore, a construction machine in which a side camera is provided on the right side in a vehicle, and an image photographed by the side camera is displayed on a monitor so as to monitor the surrounding area on the right side of the vehicle is known.

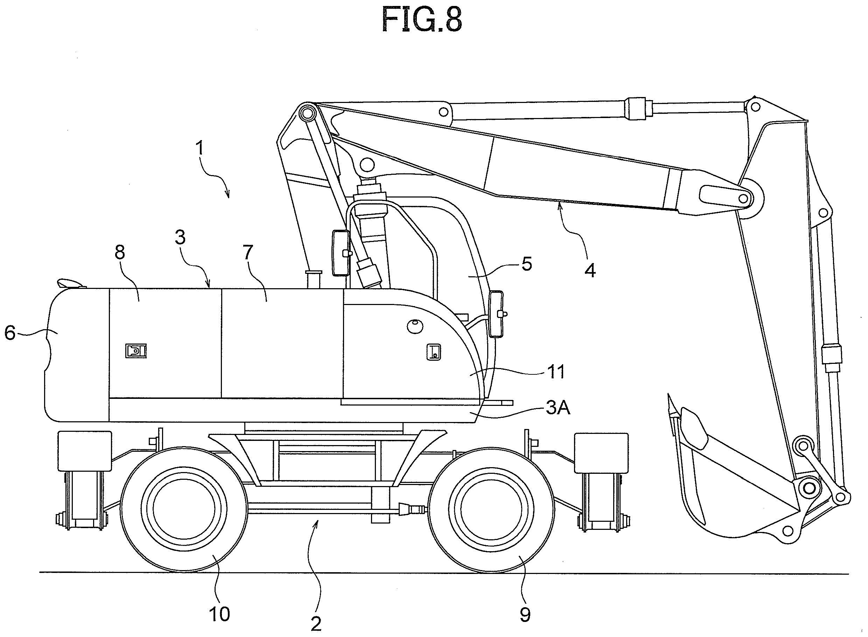

FIG. 8 provides a side view of a construction machine (wheel hydraulic excavator) provided with a side camera. As illustrated in FIG. 8, the construction machine 1 includes a traveling structure 2, a revolving structure 3 provided above the traveling structure 2 and having a vehicle body frame 3A, and a front working device 4 having a boom which is fixed to the revolving structure 3 to rotate in the up and down direction, an arm, and a bucket. The revolving structure 3 includes in the front portion thereof an operator's cab 5 and in the back portion thereof a counterweight 6. A fuel tank 7 and engine compartment 8 are provided between the operator's cab 5 and the counterweight 6. In addition, reference numbers 9, 10 denote wheels provided in the front and back right and left portions of the traveling structure 2, respectively.

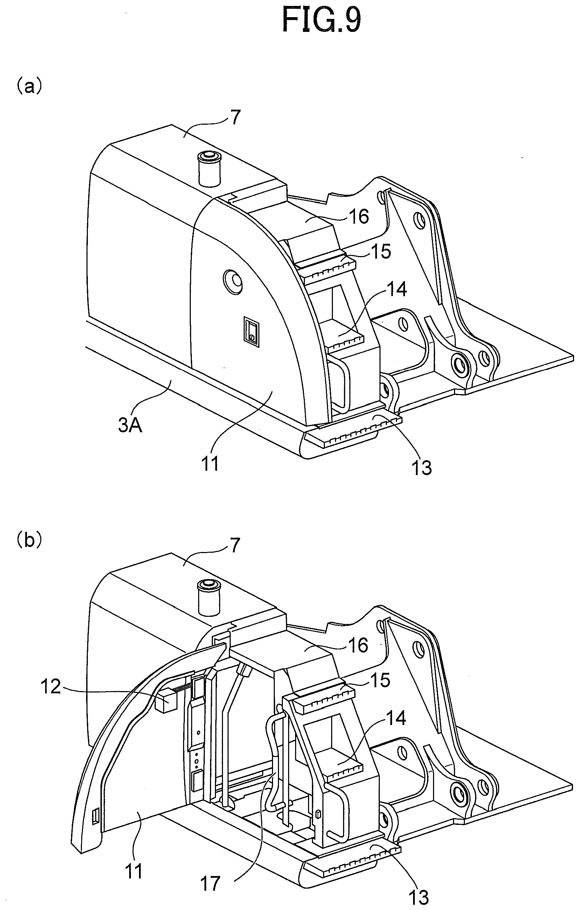

A utility compartment having an openable and closable side door 11 is provided in front of the fuel tank 7 in the construction machine 1. Hydraulic equipment which controls the driving of the vehicle body, a maintenance tool and the like are housed in the utility compartment. FIG. 9 illustrates a configuration near the side door 11. FIG. 9(a) provides a perspective view when the side door 11 is closed and FIG. 9(b) provides a perspective view when the side door 11 is opened.

The back portion of the side door 11 is mounted on the front portion of the fuel tank 7 thorough a hinge (not shown) so that the side door 11 is openabaly and closably mounted on the fuel tank 7. The side camera 12 is attached inside the side door 11, and the side door 11 is provided such that an imaging lens faces outside from a hole provided in the side door 11. The side door 11 is opened and closed for the maintenance of the hydraulic equipment in the utility compartment and removing the maintenance tool. In addition, a handrail 17 is provided in the utility compartment illustrated in FIG. 9(b). The side door 11 is also opened and closed when using the handrail 17 for climbing up to the top surface portion of the revolving structure 3 by using steps 13, 14, 15, 16 for the maintenance on the revolving structure 3.

### PRIOR ART DOCUMENT

### PATENT DOCUMENT

Patent Document 1: JP2008-231726A
Patent Document 2: JP2007-278025A

### DISCLOSURE OF THE INVENTION

### PROBLEMS TO BE SOLVED BY THE INVENTION

According to the above-described structure which attaches the side camera to the side door, it is necessary to arrange the wiring for the side camera in view of the opening and closing of the side door because the side door is openably and closably provided in the vehicle body. Thus, the assembling performance of the side camera to the vehicle body is deteriorated. It is also necessary to provide a protective structure for the wiring because a measure which prevents damage to the wiring due to the opening and closing of the door is required. For this reason, the structure becomes complex. Moreover, the side camera projects in the utility compartment when the door is closed, so that an arrangement which prevents interference with inside equipment is required, and the arrangement position is limited.

It is, therefore, an object of the present invention to provide a construction machine with a side camera attachment structure which improves the assembling performance of the side camera to a vehicle body and does not require a special protective structure for the wiring of the side camera.

### MEANS FOR SOLVING THE PROBLEM

In order to achieve the above object, a construction machine with a side camera attachment structure according to the features of claim 1 is applied. In particular, a construction machine with a side camera attachment structure comprises a vehicle body frame constituting a revolving structure of the construction machine, an operator's cab provided in one side of right and left of a front portion of the vehicle body frame, a working device provided in a central position in the front portion of the vehicle body frame, and a utility compartment provided in the other side of the right and left of the front portion of the vehicle body frame, which is a side opposite to the operator's cab across the working device. According to the invention set forth in Claim 1, the utility compartment is formed into a box shape formed by a right side wall, a left side wall and a lockable opening and closing cover, the opening and closing cover opening and closing an upper portion of the utility compartment, and a fastener which fastens a side camera for imaging a side of the other side of the right and left of the vehicle body frame is provided in the utility compartment. Dependent claims relate to preferred embodiments of the present invention.

According to the above constitution, the side camera can be fastened to the right-side wall of the utility compartment, for example, by simply using the fastener in the utility compartment. Therefore, the assembling performance of the side camera to the vehicle body frame can be improved. Moreover, it becomes unnecessary to provide a special protective structure for the wiring of the side camera, and thus, a simple side camera attachment structure can be achieved.

The invention further includes a storage case which stores inside thereof the side camera. According to the invention, the fastener of the utility compartment is provided in one of the right side wall and the left side wall, the storage case is formed into a box shape having at least a left side surface wall, a right side surface wall, and a front surface wall, a fastened portion which fastens the storage case to the fastener of the utility compartment is provided in one of the left side surface wall and the right side surface wall, an opening portion through which an imaging lens of the side camera faces outside is provided in the other of the left side surface wall and the right side surface wall, and the storage case is provided outside the utility compartment.

According to the invention of Claim 2, the utility compartment is formed such that a side wall located on the other side of the right and left of the vehicle body frame in the right side wall and the left side wall is located on the operator's cab side far from an end portion of the other side of the right and left of the vehicle body frame, and the storage case and the utility compartment are arranged next to each other toward the side of the operator's cab from an end portion of the other side of the vehicle body frame.

According to the invention an oil storage tank is provided behind the utility compartment on the vehicle body frame, a concave portion is formed in a front lower portion of the oil storage tank, the storage case is housed in the concave portion of the oil storage tank, and a back end portion of the utility compartment is housed in the concave portion.

According to the invention of Claim 3, a space which can be used as a step is formed in front of the storage case on the side of the utility compartment in a position of the other side of the right and left of the front portion of the vehicle body frame.

### EFFECT OF THE INVENTION

According to the present invention, a side camera attachment structure for a construction machine, which can improve the assembling structure of the side camera to the vehicle body and does not require a special protective structure for the wiring of the side camera, can be achieved.

### BRIEF DESCRIPTION OF DRAWINGS

FIG. 1 provides a side view of a construction machine to which a side camera attachment structure according to the present invention is applied.
FIG. 2 provides a perspective view illustrating an enlarged right front portion of the construction machine in FIG. 1. FIG. 2(a) provides a view illustrating a state in which an opening and closing cover of a utility box is closed. FIG. 2(b) provides a view illustrating a state in which an opening and closing cover of a utility box is opened.
FIG. 3 illustrates a method of attaching a storage case in which a side camera is stored. FIG. 3(a) provides a perspective view illustrating a state before the attachment of the storage case. FIG. 3(b) provides a perspective view illustrating a state after the attachment of the storage case.
FIG. 4 provides a perspective view illustrating an external appearance of the storage case in which the side camera is stored.
FIG. 5 provides a perspective view illustrating the storage case in FIG. 4 as seen from the back side.
FIG. 6 provides a sectional view of a portion where the storage case in which the side camera according to a first embodiment is stored is attached to the utility box.
FIG. 7 provides a sectional view of an attachment portion illustrating a fastening structure of the storage case to the utility box according to a second embodiment. FIG. 7(a) provides a sectional view before the attachment. FIG. 7(b) provides a sectional view after the attachment.
FIG. 8 provides a side view of a construction machine provided with a side camera according to a conventional example.
FIG. 9 provides a perspective view illustrating an enlarged right front portion of the construction machine in FIG. 8. FIG. 9(a) provides a view illustrating a state in which a side door is closed. FIG. 9(b) provides a view illustrating a state in which the side door is opened.

### DESCRIPTION OF EMBODIMENT

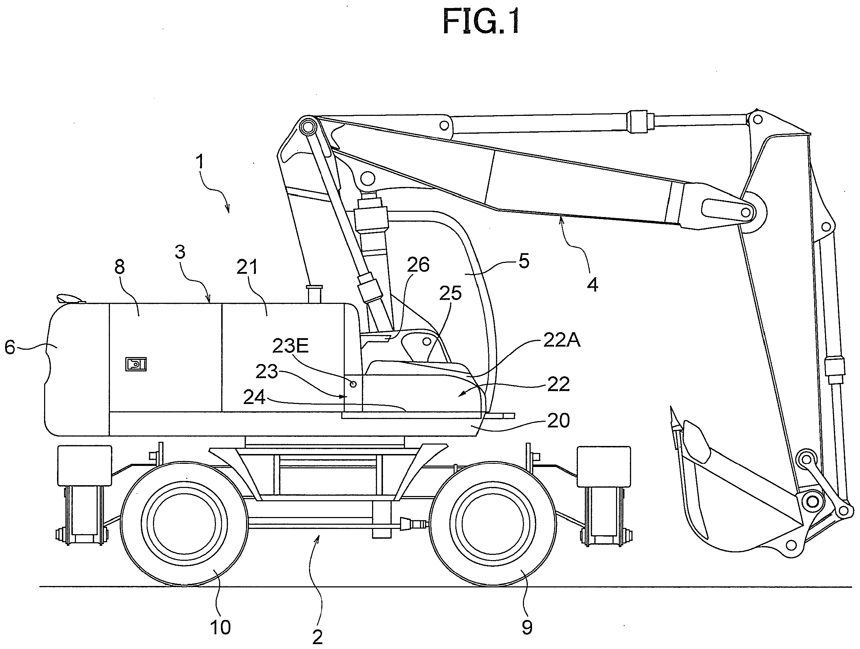

Hereinafter, a first embodiment of the present invention will be described with reference to FIGs. 1-6.

FIG. 1 provides a side view of a construction machine to which a side camera attachment structure according to the present invention is applied. As illustrated in FIG. 1, a construction machine 1 includes a traveling structure 2, a revolving structure 3 which is provided above the traveling structure 2 and has a vehicle body frame 20, and a front working device 4 having a boom which is fixed to the revolving structure 3 and rotates in the up and down direction, an arm and a bucket. The revolving structure 3 includes in the left front portion thereof an operator's cab 5 and in the back portion thereof a counterweight 6. An engine compartment 8 is provided in front of the counterweight 6. An oil storage tank 21 including a fuel tank is provided in front of the engine compartment 8 on the side (right side) opposite to the operator's cab 5 across the front working device 4. In addition, reference numbers 9, 10 denote wheels provided in the front and back right and left portions of the traveling structure 2, respectively. A utility box 22 which stores inside thereof a tool or the like, and is openable and closable by an opening and closing cover 22A, a storage case 23 which stores inside thereof a side camera 32 (not shown in FIG. 1), a first step 24, a second step 25, and a third step 26 which are used when climbing up to the top surface portion of the revolving structure 3 are provided in front of the fuel tank 21. In addition, the details of these will be described later.

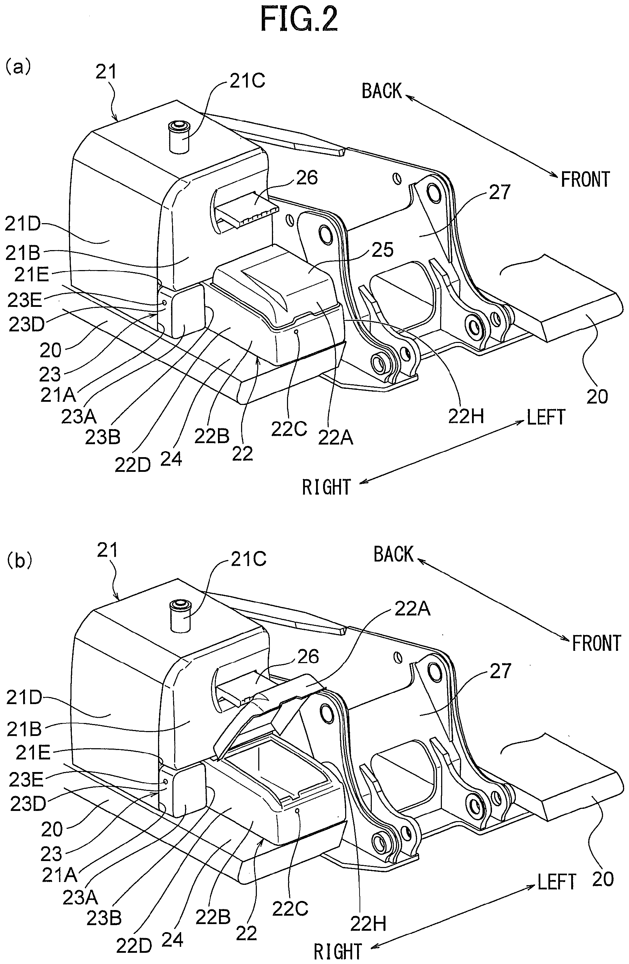

FIGs. 2(a), 2(b) are perspective views each illustrating the enlarged right front portion of the construction machine (hydraulic excavator). FIG. 2(a) provides a view illustrating a state in which the opening and closing cover 22A of the utility box 22 is closed. FIG. 2(b) provides a view illustrating a state in which the opening and closing cover 22A of the utility box 22 is opened. In addition, in each of FIG. 2(a) and FIG. 2(b), the right side is the front portion side in the construction machine and the left side is the back portion side in the construction machine.

As illustrated in FIGs. 2(a), 2(b), a working device connection portion 27 to which the front working device 4 is connected is provided in the central portion of the front portion of the vehicle body frame 20. The working device connection portion 27 extends in the front and back direction of the vehicle body. The operator's cab 5 (refer to FIG. 1) is provided on the vehicle body frame 20 on the left side of the working device connection portion 27, and the oil storage tank 21, the utility box 22 as a utility compartment and the storage case 23 having inside thereof the side camera 32 are provided on the vehicle body frame 20 on the right side of the working device connection portion 27. The oil storage tank 21 is formed as a container in which six surfaces are formed by an upper side surface plate 21D made of a top surface plate having a fill opening 21C and right and left side surface plates, a front surface plate 21E provided in the front surfaces of the top surface plate and side surface plates, a not-shown back surface plate and a not-shown bottom surface plate. A decorative cover 21B having a predetermined thickness for ensuring the design of the tank is provided in the front surface plate 21E of the oil storage tank 21. This decorative cover 21B is provided to cover the front surface of the front surface plate 21E without covering the lower portion of the front surface plate 21E. A concave portion 21A is formed below the decorative cover 21B by the lower surface of the decorative cover 21B, the front surface plate 21E of the oil storage tank 21, and the upper surface of the vehicle body frame 20.

The utility box 22 includes a utility box main body 22B formed by a right side wall 22D located on the right end side in the vehicle body frame 20, a left side wall 22H located on the working device connection portion 27 side and front and back side walls (not shown) connecting these side walls in the front and back portions, an opening and closing cover 22A which opens and closes an upper opening portion of the utility body main body 22B by a not-shown hinge, and a locking opening 22C for locking the opening and closing cover 22A. A part of the back end portion of the utility box 22 is housed in the concave portion 21A provided in the front surface of the oil storage tank 21. The right side wall 22D is provided in the vehicle body frame 20 to be located inward (left side) from the right side end of the vehicle body frame 20, such that the first step 24 made of a space having a predetermined width is formed on the vehicle body frame 20 on the right side of the right side wall 22D. The opening and closing cover 22A of the utility box 22 includes on the top surface thereof a planar portion. This planar portion constitutes the second step 25 when the opening and closing cover 22A is closed. The third step 26 which projects from a cutout provided in the decorative cover 21B is provided in the upper portion of the front surface plate 21E of the oil storage tank 21. An operator can easily access the oil storage tank 21 by using the first step 24, second step 25, third step 26, and hand guide portion or hand rail portion (not shown).

In addition, the hinge of the opening and closing cover 22A is provided in a position (in front of the concave portion 21A) where the opening and closing cover 22A does not interfere with the lower portion of the decorative cover 21B of the oil storage tank 21 in the opening and closing of the opening and closing cover 22A.

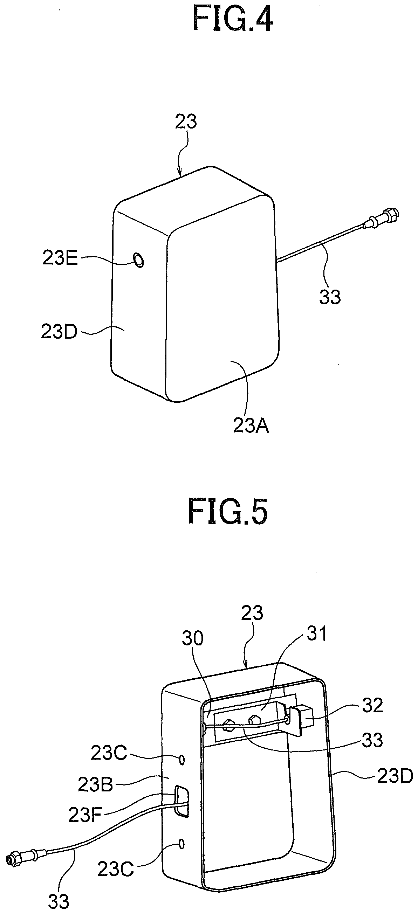

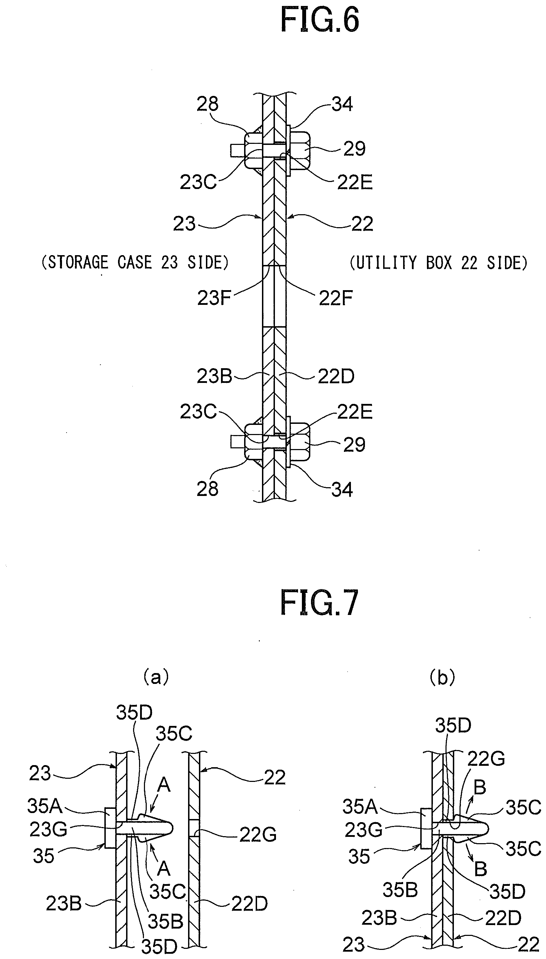

The storage case 23 is housed in the concave portion 21A. As illustrated in FIGs. 4, 5, the storage case 23 is formed into a box shape having an opening back surface and five surfaces closed by a front surface wall 23A, right side surface wall 23D, left side surface wall 23B, top surface wall, and lower surface wall. A small-diameter opening 23E is provided in the right side surface wall 23D, and two bolt holes 23C and a rectangular through-hole 23F between the two bolt holes 23C are provided in the left side surface wall 23B. A weld nut 28 is firmly fixed to the bolt hole 23C in the inner surface of the left side surface wall 23B (refer to FIG. 6). A stay 30 is provided between the left side surface wall 23B and the portion near the opening 23E of the right side surface wall 23D in the storage case 23. The side camera 32 which is provided in the storage case 23 is fastened to an L-shape bracket 31, and the bracket 31 is fastened to the stay 30 by a bolt such that the imaging lens of the side camera 32 faces outside from the opening 23E. A harness 33 connected to the side camera 32 is guided outside from the through-hole 23F. The storage case 23 is housed in the concave portion 21A as illustrated in FIGs. 2(a), 2(b), and is provided in the concave portion 21A such that the left side surface wall 23B is fastened to the right side wall 22D of the utility box 22. With the storage case 23 being fastened to the utility box 22, the right side surface wall 23D is in plane with the right side surface plate of the upper side surface plate 21D of the oil storage tank 21 and the side surface of the decorative cover 21B, and the front surface wall 23A is in plane with the front surface of the decorative cover 21B.

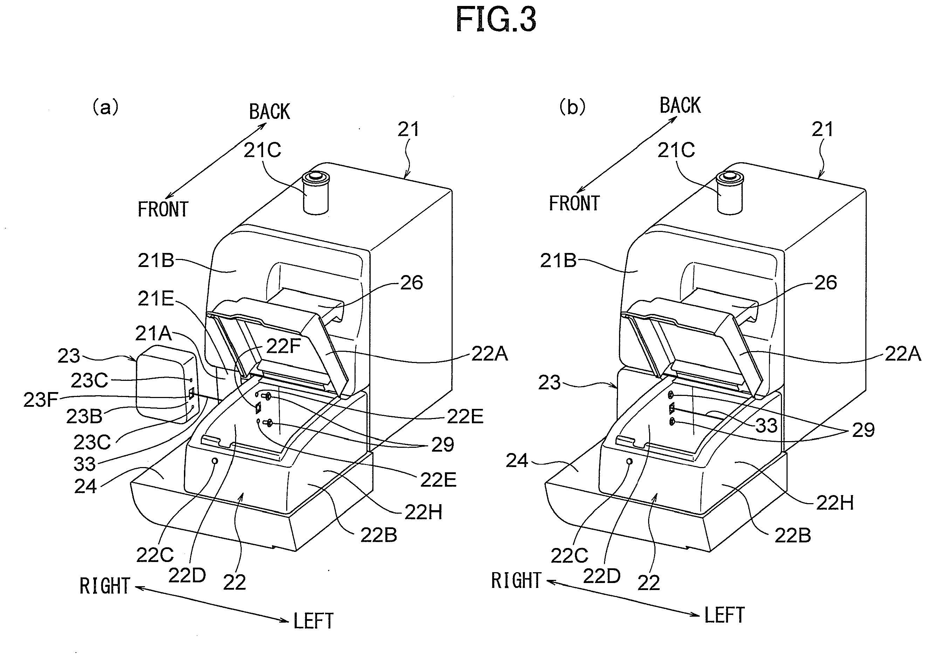

Next, the structure which fastens the storage case 23 to the utility box 22 will be described with reference to FIGs. 3(a), 3(b).

Two bolt through-holes 22E and a rectangular through-hole 22F between the bolt through-holes 22E, 22E are provided in a part of the back end portion of the right side wall 22D of the utility box 22, which is housed in the concave portion 21A. The bolt through-holes 22E and the through-hole 22F correspond to the bolt holes 23C and the through-holes 23F provided in the left side surface wall 23B of the storage case 23, and these are aligned. A bolt 29 is inserted into the bolt through-hole 22E and the bolt hole 23C from the inside of the utility box 22, and the screw portion of the bolt 29 is fastened to the weld nut 28 provided in the bolt hole 23C (refer to FIG. 6). In addition, a washer 34 is provided between the head portion of the bolt 29 and the right side wall 22D in FIG.6.

The harness 33 extending from the side camera 32 passes through the through-hole 22F of the right side wall 22D of the utility box 22 from the through-hole 23F of the left side surface wall 23B of the storage case 23, is guided in the utility box 22, and is connected to a not-shown controller which controls the side camera 32 in the utility box 22.

The above embodiment has the following effects.

In the present embodiment, the storage case 23 is attached to the right side wall 22D of the utility box 22 by threadably mounting the bolt 29 on the weld nut 28 fastened to the inside of the left side surface wall 23B of the storage case 23 from the inside of the utility box 22. When removing the storage case 23 from the right side wall 22D of the utility box 22, the bolt 20 is unfastened from the inside of the utility box 22. In the present embodiment, the opening and closing cover 22A of the utility box 22 can be locked, so that the storage case 23 can not be removed from the right side wall 22D of the utility box 22 when the opening and closing cover 22A of the utility box 22 is locked. Therefore, the storage case 23 can not be easily removed, and thus, the camera can be prevented from being stolen.

Moreover, the side camera 32 is provided in the storage case 23 which does not require opening and closing, and the storage case 32 is fastened to the utility box 22, so that it is not necessary to provide a special protective structure for the side camera 32 and the harness 33, and thus, the assembling performance is improved.

Also, the storage case 23 is housed in the concave portion 21A provided in the front lower portion of the oil storage tank 21, and does not have a portion which projects outside. With this configuration, the storage case 23 does not have contact with an obstacle, and damage to the storage case 23 can be prevented. The area of the first step 24 which is formed in front of the storage case 23 and on the right side of the utility box 22 can be increased. Therefore, an operator can easily climb up to the top surface portion of the revolving structure 3 or the like, and an operator can smoothly get in and get out from the construction machine.

Furthermore, the front surface wall 23A of the storage case 23 is aligned with the decorative cover 21B of the oil storage tank 21, and the right side surface wall 23D is disposed to be in plane with the right side surface plate of the upper side plate 21D of the oil storage tank 21, and the opening 23E, which faces a lens, is formed in the right side surface wall 23D, so that the viewing field area of the camera is not blocked by a structural object such as the adjacent oil storage tank 21, and sufficient side vision can be ensured.

Next, a second embodiment will be described with reference to FIG. 7.

In this embodiment, the fastening of the utility box 22 and the storage case 23 in the first embodiment is performed by an attachment pin 35 instead of the weld nut 28 and the bolt 29. A pin through-hole 23G is provided in the left side surface wall 23B of the storage case 23 instead of the bolt hole 23C. A pin through-hole 22G is provided in the right side wall 22D of the utility box 22 instead of the bolt through-hole 22E.

The attachment pin 35 includes a circular plate like head portion 35A, a shaft portion 35B vertically provided in the head portion 35A, a projection 35C provided in the leading end side in the shaft portion 35B, and a base portion 35D provided on the base end side in the shaft portion 35B, the base portion 35D having a diameter slightly larger than the diameter of the shaft portion 35B. The projection portion 35C includes a wedge shape having a pointed leading end, and is axisymetrically provided in two portions of the leading end side in the shaft portion 35B. The diameter of the projection 35C is normally increased as illustrated in FIG. 7(a) by the biasing force such as a spring, but can be decreased in the arrow A direction if the power is applied in the arrow A direction. The projection 35C and the end portion 35D of this attachment pin 35 penetrate through the pin through-hole 23G of the left side surface wall 23B of the storage case 23, and the head portion 35A is firmly fastened to the inner surface of the left side surface wall 23B in a state in which the projection 35C and the base portion 35D project outside.

Then, the projection 35C of the attachment pin 35 is aligned with the pin through-hole 22G of the right side wall 22D of the utility box 22, and the projection 35C of the attachment pin 35 is pushed into the pin through-hole 22G of the right side wall 22D of the utility box 22 as illustrated in FIG. 7(b), so that the storage case 23 is fastened to the utility box 22. When pushing the projection 35C of the attachment pin 35 into the pin through-hole 22G of the utility box 22, the diameter of the projection 35C is once decreased while passing through the pin through-hole 22G, but it is increased in the arrow B direction by the biasing force such as a spring after passing through the pin through-hole 22G. With this configuration, the storage case 23 is fastened to the utility box 22 without opening the opening and closing cover 22A of the utility box 22. In addition, when removing the storage case 23 from the right side wall 22D of the utility box 22, the opening and closing cover 22A of the utility box 22 is opened, an operator puts a hand inside the utility box 22, the diameter of the projection 35C of the attachment pin 35 is decreased by pressing the projection 35C in the arrow A direction (refer to FIG. 7(a)), and the axis portion 35B of the attachment pin 35 is pulled out from the pin through-hole 22G.

According to the embodiment of the present invention, by pushing the storage case 23 to the utility box 22 without using a tool or the like, the storage case 23 can be attached to the utility box 22.

In addition, in the above embodiment, the operator's cab 5 is provided in the front left side in the vehicle body frame 20, and the utility box 22 and the storage case 23 are provided in the front right side in the vehicle body frame 20, but the operator's cab can be provided in the front right side in the vehicle body frame 20 and the utility box and the storage case can be provided in the front left side in the vehicle body frame 20. In this case, the above-described right and left relationship becomes opposite.

### DESCRIPTION OF REFERENCE NUMBERS

- 3: revolving structure
- 4: front working device (working device)
- 5: operator's cab
- 20: vehicle body frame
- 21: oil storage tank
- 22: utility box (utility compartment)
- 22A: opening and closing cover
- 22D: right side wall
- 22E: bolt through-hole
- 22F: through-hole
- 22G: pin through-hole
- 22H: left side wall
- 23: storage case
- 23A: front surface wall
- 23B: left side surface wall
- 23C: bolt hole
- 23D: right side surface wall
- 23E: opening
- 23F: through-hole
- 23G: pin through-hole
- 24: first step (step)
- 28: weld nut (fastened portion)
- 29: bolt (fastener)
- 32: side camera
- 33: harness (wiring)
- 35: attachment pin (fastener)
- 35C: projection

## Claims

1. A construction machine with a side camera attachment structure, comprising:
- a vehicle body frame (20) constituting a revolving structure (3) of the construction machine;
- an operator's cab (5) provided in one side of right and left of a front portion of the vehicle body frame (20);
- a working device (4) provided in a central position in the front portion of the vehicle body frame (20); and
- a utility compartment (22) provided in the other side of the right and left of the front portion of the vehicle body frame (20), which is a side opposite to the operator's cab (5) across the working device (4), **characterized in that**:
the utility compartment (22) is formed into a box shape formed by a right-side wall, a left side wall and a lockable opening and closing cover, the opening and closing cover opening and closing an upper portion of the utility compartment (22), and a fastener which fastens a side camera (32) for imaging a side of the other side of the right and left of the vehicle body frame (20) is provided in the utility compartment (22), and wherein
the construction machine further comprises:
a storage case (23) which stores inside thereof the side camera (32), wherein the fastener (35) of the utility compartment (22) is provided in one of the right side wall and the left side wall, the storage case (23) is formed into a box shape having at least a left side surface wall, right side surface wall, and a front surface wall, a fastened portion (28) which fastens the storage case (23) to the fastener (35) of the utility compartment (22) is provided in one of the left side surface wall and the right side surface wall, an opening portion through which an imaging lens of the side camera (32) faces outside is provided in the other of the left side surface wall and the right side surface wall, and the storage case (23) is provided outside the utility compartment (22), and wherein
an oil storage tank (21) is provided behind the utility compartment (22) on the vehicle body frame (20), a concave portion is formed in a front lower portion of the oil storage tank (21), the storage case (23) is housed in the concave portion of the oil storage tank (21), and a back-end portion of the utility compartment (22) is housed in the concave portion.

2. The construction machine with a side camera attachment structure according to Claim 1, wherein
the utility compartment (22) is formed such that a side wall located on the other side of the right and left of the vehicle body frame (20) in the right-side wall and the left side wall is located on the operator's cab side far from an end portion of the other side of the right and left of the vehicle body frame (20), and the storage case (23) and the utility compartment (22) are arranged next to each other toward the side of the operator's cab from an end portion of the other side of the vehicle body frame (20).

3. The construction machine with a side camera attachment structure according to Claim 1 or 2, wherein
a space which can be used as a step (24) is formed in front of the storage case (23) on the side of the utility compartment (22) in a position of the other side of the right and left of the front portion of the vehicle body frame (20).

## Patentansprüche

1. Baumaschine mit einer Seitenkamerabefestigungsstruktur, die Folgendes umfasst:
- einen Fahrzeugkarosserieaufbau (20), der eine Drehstruktur (3) der Baumaschine bildet;
- eine Bedienerkabine (5), die auf einer rechten oder linken Seite eines Frontabschnitts des Fahrzeugkarosserieaufbaus (20) vorgesehen ist;
- eine Arbeitsvorrichtung (4), die in einer zentralen Position im Frontabschnitt des Fahrzeugkarosserieaufbaus (20) vorgesehen ist; und
- ein Nutzfach (22), das auf der weiteren der rechten oder linken Seite des Frontabschnitts des Fahrzeugkarosserieaufbaus (20), die eine Seite gegenüber der Bedienerkabine (5) jenseits der Arbeitsvorrichtung (4) ist, vorgesehen ist, **dadurch gekennzeichnet, dass**
das Nutzfach (22) in einer Kastenform gebildet ist, die durch eine rechte Seitenwand, eine linke Seitenwand und eine verriegelbare Öffnungs- und Schließabdeckung gebildet ist, wobei die Öffnungs- und Schließabdeckung einen oberen Abschnitt des Nutzfachs (22) öffnet und schließt und ein Befestigungsmittel, das eine Seitenkamera (32) zum Abbilden der weiteren der rechten oder linken Seite des Fahrzeugkarosserieaufbaus (20) befestigt, im Nutzfach (22) vorgesehen ist, wobei
die Baumaschine ferner Folgendes umfasst:
ein Unterbringungsgehäuse (23), in dem die Seitenkamera (32) untergebracht ist, wobei das Befestigungsmittel (35) des Nutzfachs (22) an einer der rechten Seitenwand und der linken Seitenwand vorgesehen ist, das Unterbringungsgehäuse (23) in einer Kastenform gebildet ist, die mindestens eine linke Seitenflächenwand, eine rechte Seitenflächenwand und eine Vorderseitenwand besitzt, ein befestigter Abschnitt (28), der das Unterbringungsgehäuse (23) am Befestigungsmittel (35) des Nutzfachs (22) befestigt, in einer der linken Seitenflächenwand und der rechten Seitenflächenwand vorgesehen ist, ein Öffnungsabschnitt, durch den eine Bildgebungslinse der Seitenkamera (32) nach außen gewandt ist, in der weiteren der linken Seitenflächenwand und der rechten Seitenflächenwand vorgesehen ist und das Unterbringungsgehäuse (23) außerhalb des Nutzfachs (22) vorgesehen ist, und wobei
ein Öllagertank (21) hinter dem Nutzfach (22) am Fahrzeugkarosserieaufbau (20) vorgesehen ist, ein konkaver Abschnitt in einem unteren Frontabschnitt des Öllagertanks (21) gebildet ist, das Unterbringungsgehäuse (23) im konkaven Abschnitt des Öllagertanks (21) untergebracht ist und ein nachgeschalteter Abschnitt des Nutzfachs (22) im konkaven Abschnitt untergebracht ist.

2. Baumaschine mit einer Seitenkamerabefestigungsstruktur nach Anspruch 1, wobei
das Nutzfach (22) derart gebildet ist, dass eine Seitenwand, die sich auf der weiteren der rechten oder der linken Seite des Fahrzeugkarosserieaufbaus (20) in der rechten Seitenwand bzw. der linken Seitenwand befindet, sich auf der Bedienerkabinenseite entfernt von einem Endabschnitt der weiteren der rechten oder der linken Seite des Fahrzeugkarosserieaufbaus (20) befindet und das Unterbringungsgehäuse (23) und das Nutzfach (22) von einem Endabschnitt der weiteren Seite des Fahrzeugkarosserieaufbaus (20) zur Seite der Bedienerkabine nebeneinander angeordnet sind.

3. Baumaschine mit einer Seitenkamerabefestigungsstruktur nach Anspruch 1 oder 2, wobei
ein Raum, der als eine Stufe (24) verwendet werden kann, vor dem Unterbringungsgehäuse (23) auf der Seite des Nutzfachs (22) in einer Position der weiteren der rechten oder der linken Seite des Frontabschnitts des Fahrzeugkarosserieaufbaus (20) gebildet ist.

## Revendications

1. Machine de chantier avec une structure de fixation de caméra latérale, comprenant :
- un châssis formant corps de véhicule (20) constituant une structure pivotante (3) de la machine de chantier ;
- une cabine d'opérateur (5) prévue sur un côté de droite et de gauche d'une portion avant du châssis formant corps de véhicule (20) ;
- un dispositif de travail (4) prévu dans une position centrale dans la portion avant du châssis formant corps de véhicule (20) ; et
- un compartiment de rangement (22) prévu dans l'autre côté de droite et de gauche de la portion avant du châssis formant corps de véhicule (20), qui est un côté opposé à la cabine d'opérateur (5) à travers le dispositif de travail (4), **caractérisée en ce que** :
le comportement de rangement (22) est réalisé dans une forme de boîte formée par une paroi latérale de droite, une paroi latérale de gauche et un couvercle d'ouverture et de fermeture verrouillable, le couvercle d'ouverture et de fermeture ouvrant et fermant une portion supérieure du comportement de rangement (22), et un moyen de fixation qui fixe une caméra latérale (32) destinée à imager un côté de l'autre côté de la portion de droite et de gauche du châssis formant corps de véhicule (20) est prévu dans le comportement de rangement (22), et dans laquelle la machine de chantier comprend en outre :
un boîtier de stockage (23) qui stocke à l'intérieur de lui-même la caméra latérale (32), dans laquelle le moyen de fixation (35) du comportement de rangement (22) est prévu dans une de la paroi latérale de droite et de la paroi latérale de gauche, le boîtier de stockage (23) est réalisé dans la forme d'une boîte ayant au moins une paroi de surface latérale de gauche, une paroi de surface latérale de droite, et une paroi de surface avant, une portion fixée (28) qui fixe le boîtier de stockage (23) au moyen de fixation (35) du compartiment de rangement (22) est prévu dans une de la paroi de surface latérale de gauche et de la paroi de surface latérale de droite, une portion d'ouverture à travers laquelle une lentille d'imagerie de la caméra latérale (32) fait face à l'extérieur est prévue dans l'autre de la paroi de surface latérale de gauche et de la paroi de surface latérale de droite; et le boîtier de stockage (23) est prévu à l'extérieur du compartiment de rangement (22), et dans laquelle
un réservoir de stockage d'huile (21) est prévu derrière le comportement de rangement (22) sur le châssis formant corps de véhicule (20), une portion concave est réalisée dans une portion inférieure avant du réservoir de stockage d'huile (21), le boîtier de stockage (23) est logé dans la portion concave du réservoir de stockage d'huile (21), et une portion d'extrémité arrière du compartiment de rangement (22) est logée dans la portion concave.

2. Machine de chantier avec une structure de fixation de caméra latérale selon la revendication 1, dans laquelle
le compartiment de rangement (22) est réalisé de sorte qu'une paroi latérale située sur l'autre côté de la droite et de la gauche du châssis formant corps de véhicule (20) dans la paroi du côté droit et la paroi du côté gauche est située sur le côté de la cabine d'opérateur depuis une portion d'extrémité de l'autre côté de la droite et de la gauche du châssis formant corps de véhicule (20), et le boîtier de stockage (23) et le compartiment de rangement (22) sont agencés l'un à côté de l'autre en direction du côté de la cabine d'opérateur depuis une portion d'extrémité de l'autre côté du châssis formant corps de véhicule (20).

3. Machine de chantier avec une structure de fixation de caméra latérale selon la revendication 1 ou 2, dans laquelle
un espace qui peut être utilisé comme une marche (24) est réalisé à l'avant du boîtier de stockage (23) sur le côté du compartiment de rangement (22) dans une position de l'autre côté de la droite et de la gauche de la portion avant du châssis formant corps de véhicule (20).
